# EUROPÄISCHE PATENTSCHRIFT

(11) **EP 1 546 585 B1**
(45) Veröffentlichungstag und Bekanntmachung des Hinweises auf die Patenterteilung: **24.04.2013**
(21) Anmeldenummer: 03753318.9
(22) Anmeldetag: 19.09.2003
(51) Int. Cl.: F16J 15/02

(54) **DICHTUNG**
SEAL
JOINT D'ETANCHEITE

(30) Priorität: 02.10.2002 DE 10246096
(43) Veröffentlichungstag der Anmeldung: 29.06.2005
(73) Patentinhaber: Siemens Aktiengesellschaft, 80333 München (DE)
(72) Erfinder: HÄBERLEIN, Manfred, 90574 Rosstal (DE); KRAUS, Heribert, 91353 Hausen (DE); FRIEDL, Edgar, 91361 Pinzberg (DE); FRIEDRICH, Waldemar, 91301 Forcheim (DE); POSTLER, Walter, 91356 Kirchehrenbach (DE); RABER, Heinz, 91315 Höchstadt (DE); REIF, Manfred, 91093 Hessdorf (DE); ZAMETZER, Georg, 91301 Forchheim (DE)
(86) Internationale Anmeldenummer: PCT/DE2003/003122
(87) Internationale Veröffentlichungsnummer: WO 2004/031625

(56) Entgegenhaltungen:
- EP-A- 0 916 879
- EP-A- 1 223 629
- US-A- 3 507 505
- US-A- 3 575 431
- PATENT ABSTRACTS OF JAPAN & JP 10 311430 A (YAGI ANTENNA)

## Beschreibung

Die Erfindung bezieht sich auf eine Nut mit einer darin eingelegten Dichtung gemäß Oberbegriff des Patentanspruchs 1.

Die DE 31 36 927 A1 offenbart eine in eine Nut einlegbare Dichtung aus elastischem Material in Form eines O-Ringes zum Abdichten zwischen zwei Bauteilen. Eine solche Dichtung mit kreis- oder kreisscheibenförmiger Querschnittsfläche bietet nach dem Einlegen in die Nut eines ersten Bauteils und unter Krafteinwirkung durch ein zweites, auf die Dichtung pressendes Bauteil nur dann eine gute Abdichtung, wenn die Dichtung ausreichend Spiel gegenüber den Seitenwandungen der Nut besitzt und dadurch ein elastisches Ausbreiten der Dichtung in der Nut ermöglicht ist. Bei fehlendem Spiel der Dichtung in der Nut besteht die Gefahr, daß die Dichtung unter Krafteinwirkung teilweise aus der Nut gepresst wird. Dies hat Beschädigungen der Dichtung und Undichtigkeiten zur Folge.

Weitere Dichtungen sind aus der EP 1 223 629 A1, der EP 0 916 879 A1 und der JP 10311430 zu entnehmen.

Die Montage eine Dichtung mit Spiel gegenüber den Seitenwandungen der Nut bereitet allerdings große Probleme, wenn die Dichtung nach dem Einlegen in die Nut nicht durch ihr Eigengewicht in der Nut gehalten wird, sondern, wie z.B. bei Überkopfmontage, aufgrund ihres Eigengewichts aus der Nut fällt, bevor die Dichtung durch Krafteinwirkung in der Nut fixiert ist. Zur Abhilfe wird in schwierigen Montagesituationen die Dichtung deshalb oftmals auf ihrer dem Nutgrund zugewandten Seite mit Klebstoff versehen und auf dem Nutgrund aufgeklebt.

Eine Krafteinwirkung auf die Klebestelle, z.B. aufgrund eines auf die Dichtung pressenden Bauteils, oder der Kontakt der abzudichtenden Medien mit der Klebestelle führt allerdings oft zur Zerstörung der Klebestelle und damit zu Undichtigkeiten der Dichtung.

Aus der US 3,575,431 geht eine Nut mit einer darin eingelegten Dichtung hervor, wobei die Nut einen im Wesentlichen trapezförmigen Querschnitt aufweist, so dass die Dichtung durch die Form der Seitenwände der Nut fixiert ist.

In der US 3,507,505 ist ein Dichtring beschrieben, der derart in einer Nut eingelegt ist, dass zwischen dem Dichtring und dem Nutgrund ein Luftkissen ausgebildet ist.

Es ist Aufgabe der Erfindung, trotz einfacher Fertigungs- und Montagetechnik bei auch schwieriger gegenseitiger Montagelage der abzudichtenden Bauteile eine dauerhafte und sichere gegenseitige Abdichtung zu gewährleisten.

Die Lösung dieser Aufgabe gelingt erfindungsgemäß durch eine Dichtung gemäß Anspruch 1. Vorteilhafte Ausgestaltungen der Erfindung sind jeweils Gegenstand der Unteransprüche.

Die Formgebung der Dichtung mit Übermaß derart, dass sie im Sinne einer Selbsthaltung im Presssitz gegenüber den Seitenwandungen der Nut fixierbar ist, erlaubt eine Montagehaltung der Dichtung auch bei schwieriger gegenseitiger Montagelage der gegenseitig abzudichtenden Bauteile, z.B. eine Überkopfmontage. Die Dichtung hält sich in der Nut auch gegen ihr Eigengewicht, so daß es nicht notwendig ist, die Dichtung mit Klebstoff zu versehen und auf den Nutgrund zu kleben. Durch den Verzicht auf Klebstoff zum Fixieren der Dichtung in der Nut ist eine dauerhafte und sichere Abdichtung möglich und gleichzeitig wird die Montage der Dichtung vereinfacht.

Bei einer Dichtung mit einem dem Nutgrund zugewandten Fußteil und einem dem Nutgrund abgewandten Kopfteil ist das Übermaß vorteilhafterweise am Fußteil der Dichtung vorgesehen. Dadurch ist die Dichtung universell bei Nuten unterschiedlichster Nuttiefen einsetzbar.

Eine hohe Elastizität und damit ein gutes Abdichten der Dichtung bei Krafteinwirkung auf ihren Kopfteil ist dadurch möglich, dass die Dichtung eine Formgebung besitzt, bei der oberhalb des Fußteils ein Freiraum gegenüber der Nut verbleibt, in den die Dichtung bei der Krafteinwirkung ausweichen kann.

Die Krafteinwirkung erfolgt hierbei zweckmäßigerweise durch ein auf das Kopfteil der Dichtung zur Abdichtung gegenüber der Nut aufgelegtes Bauteil, insbesonders ein Brennstoffzellenbauteil. Durch die Krafteinwirkung presst sich die Dichtung, bei gleichzeitiger elastischer Ausbreitung in den Freiraum der Nut, sowohl auf den Nutgrund als auch auf das aufgelegte Bauteil, so dass eine dauerhafte und sichere Abdichtung gewährleistet ist.

Die Erfindung sowie weitere vorteilhafte Ausgestaltungen der Erfindung gemäß Merkmalen der Unteransprüche werden im Folgenden anhand von Ausführungsbeispielen in den Zeichnungen näher erläutert; darin zeigen:
- FIG 1: in perspektivischer Darstellung ein erstes Ausführungsbeispiel der Dichtung,
- FIG 2: die in eine Nut eingelegte Dichtung von FIG 1 im Querschnitt,
- FIG 3: die in die Nut eingelegte Dichtung von FIG 2 mit einem auf ihrem Kopfteil anliegenden Bauteil,
- FIG 4: einen Querschnitt durch ein zweites Ausführungsbeispiel der Dichtung,
- FIG 5: einen Querschnitt durch ein drittes Ausführungsbeispiel der Dichtung,
- FIG 6: ein Brennstoffzellenbauteil mit einer umlaufenden Nut in Draufsicht,
- FIG 7: eine Dichtung zum Einlegen in die in FIG 6 gezeigte Nut in Draufsicht,
- FIG 8: eine Abdichtung zwischen zwei Brennstoffzellenbauteilen im Querschnitt.

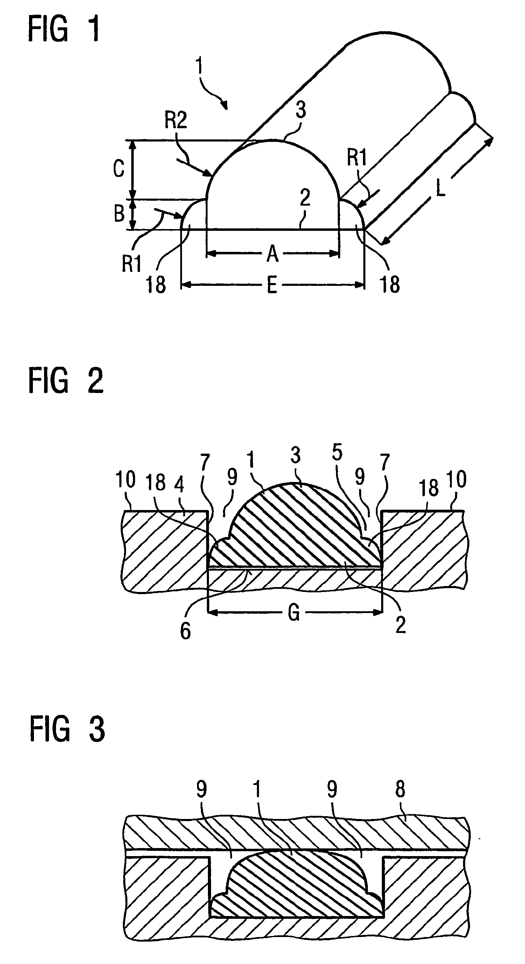

Die in FIG 1 gezeigte Dichtung 1 aus einem elastischen Material (z.B. Gummi) weist einen Fußteil 2 mit Breite E und Höhe B und einen Kopfteil 3 mit Breite A und Höhe C auf. Die Dichtung 1 ist, wie in FIG 2 dargestellt, in eine Nut 5 einlegbar, die in ein Bauteil 4 eingebracht ist. Bei dem Bauteil 4 kann es sich z.B. um ein Bauteil einer Brennstoffzelle handeln. Die Dichtung 1 ist hierbei so in die Nut 5 einlegbar, dass ihr Fußteil 2 dem Nutgrund 6 zugewandt und ihr Kopfteil 3 dem Nutgrund 6 abgewandt ist, wobei der oberste Bereich des Kopfteils 3 über die Oberfläche 10 des Bauteils 4 hinausragt. Die Breite E des Fußteils 2 ist hierbei größer als die Breite G der Nut 5, so dass die Dichtung 1 gegenüber der Nut 5 ein Übermaß besitzt.

Aufgrund des Übermaßes muss die Dichtung 1 beim Einlegen in die Nut 5 im Bereich der teilkreisförmigen, wulstartigen Ausformungen 18 des Fußteils 2 elastisch verformt und deshalb unter Kraftaufwand in die Nut 5 eingelegt werden. Die in die Nut 5 eingelegte Dichtung 1 übt aufgrund ihrer elastischen Verformung im Bereich der teilkreisförmigen, wulstartigen Ausformungen 18 eine Druckkraft auf die Seitenwandungen 7 der Nut 5 aus, so dass sie im Presssitz gegenüber den Seitenwandungen 7 der Nut 5 fixierbar ist und sich selbst in der Nut 5 hält. Diese Selbsthaltung der Dichtung 1 in der Nut 5 ermöglicht eine Montage der Dichtung 1 auch in schwierigen Montagesituationen, z.B. eine Überkopfmontage, ohne dass die Dichtung 1 zum Fixieren in die Nut 5 eingeklebt werden muss.

Die Dichtung 1 hat hierbei eine derartige Formgebung, dass oberhalb des Fußteils 2 ein Freiraum 9 gegenüber den Seitenwandungen 7 der Nut 5 verbleibt, in den die Dichtung 1 im Falle einer Krafteinwirkung auf ihren Kopfteil 3 ausweichen kann. Eine solche Krafteinwirkung und ein dadurch verursachtes elastisches Ausbreiten der Dichtung 1 in den Freiraum 9 erfolgt, wie in FIG. 3 dargestellt, insbesondere durch ein auf den Kopfteil 3 der Dichtung 1 zur Abdichtung aufgelegtes zweites Bauteil 8, bei dem es sich z.B. um ein Brennstoffzellenbauteil handelt.

Der Freiraum 9 kann dadurch auf einfache Weise geschaffen werden, daß sich der Querschnitt der Dichtung 1 von Fußteil 2 zu Kopfteil 3 im Sinne einer entsprechenden Zunahme des Freiraums 9 verringert.

Eine einfache Herstellung der Dichtung 1 ist möglich, wenn die Verringerung des Querschnitts im Sinne von teilkreisförmigen Außenkonturen mit Teilkreisradien R1, R2 für den Fußteil 2 und den Kopfteil 3 ausgebildet ist. Solche Konturen lassen sich mit einer Fräsmaschine mit wenigen Fräsvorgängen in eine Matrize einbringen, die zur Herstellung der Dichtung 1 mit einem Spritzgussverfahren oder Formpressverfahren benutzt werden kann.

Die Dichtung 1 kann flexibel an unterschiedliche Nutabmessungen und Andruckkräfte angepasst werden, denn über die Kopfteilbreite A, die Kopfteilhöhe C und die Fußteilhöhe B ist die Elastizität der Dichtung 1 beeinflussbar und über die Fußteilhöhe B und Fußteilbreite E in Verbindung mit der Breite G der Nut 5 kann die Selbsthaltung der Dichtung 1 in der Nut 5 bestimmt werden.

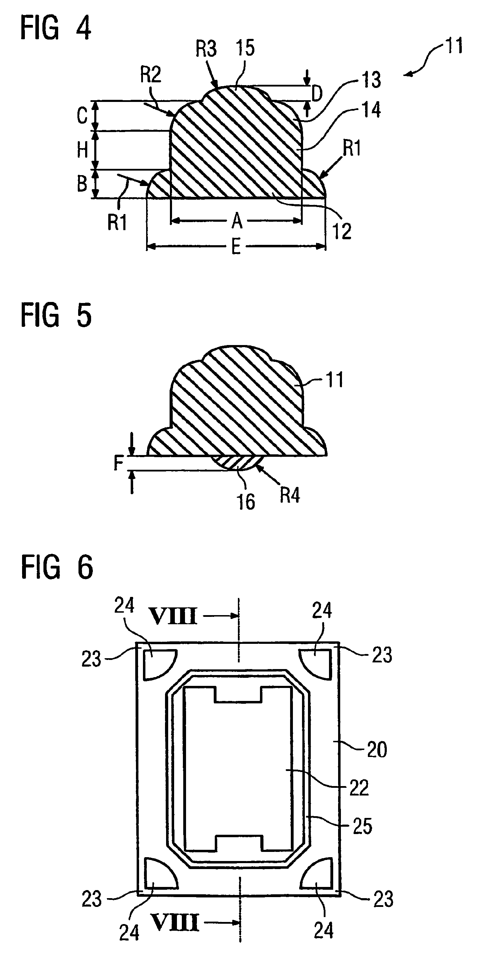

Die als zweites Ausführungsbeispiel in FIG 4 gezeigte Dichtung 11 weist ebenfalls einen Fußteil 12 und einen Kopfteil 13 auf und der Querschnitt der Dichtung 11 verringert sich vom Fußteil 12 zum Kopfteil 13 aufgrund teilkreisförmiger Außenkonturen mit Teilkreisradien R1 und R2. Die Dichtung 11 ist in die in FIG 2 gezeigte Nut 5 einlegbar und ein Bauteil 8 entsprechend FIG 3 ist auf die Dichtung 11 auflegbar. Die Dichtung 11 schließt allerdings an ihrem Kopfteil 12 mit einem vorstehenden Dichtungsteil 15 mit Höhe D, insbesondere mit teilkreisförmiger Außenkontur mit Teilkreisradius R3, ab. Dieses Dichtungsteil 15 besitzt eine im Vergleich zum restlichen Dichtungskörper größere Elastizität und kann deshalb in vorteilhafter Weise zum Ausgleich von Unebenheiten auf der mit der Dichtung 11 in Berührung stehenden Dichtungsfläche des aufliegenden Bauteils (nicht dargestellt) genutzt werden, so daß auch bei Unebenheiten eine gute Abdichtung sichergestellt ist.

Eine einfache Anpassung des Querschnittes der Dichtung 11 an unterschiedliche Einbauverhältnisse bzw. eine einfache Anpassung der Elastizität der Dichtung 11 an unterschiedliche Andruckkräfte ist dadurch möglich, dass zusätzlich zwischen Kopfteil 13 und Fußteil 12 ein Zwischenteil 14 mit überwiegend geradliniger Außenkontur und Höhe H vorgesehen ist. Über die Kopfteilbreite A, Zwischenteilhöhe H und Kopfteilhöhe C ist dann auf einfache Weise die Elastizität der Dichtung 11 beeinflussbar. Anhand der Zwischenteilhöhe H, Kopfteilhöhe C und Höhe D des vorspringenden Dichtungsteils 15 erfolgt die Einstellung der Dichtungshöhe und über die Fußteilhöhe B und Fußteilbreite E wird die Selbsthaltung der Dichtung 11 in der Nut 5 bestimmt.

Eine Verbesserung der Abdichtung der Dichtung 11 im Fall von Unebenheiten im Nutgrund kann gemäß FIG 5 dadurch erreicht werden, dass die Dichtung 11 an ihrem Fußteil 12 mit einem zusätzlichen, gegen den Nutgrund 6 vorstehenden Dichtungsteil 16 mit Höhe F, insbesondere mit teilkreisförmiger Außenkontur mit Teilkreisradius R4, versehen ist. Aufgrund seiner im Vergleich zum restlichen Dichtungskörper höheren Elastizität ist das Dichtungsteil 16 in der Lage, kleine Unebenheiten im Nutgrund auszugleichen und erlaubt somit auch bei Unebenheiten eine gute Abdichtung.

Die Herstellung der Dichtung 11 kann dadurch vereinfacht werden, dass die teilkreisförmigen Außenkonturen statt unterschiedlicher Radien R1,R2,R3,R4 alle den gleichen Radius R aufweisen. Für die Fertigung der Matrize zur Herstellung der Dichtung wird dann statt vier unterschiedlicher Fräsköpfe mit Radien R1,R2,R3,R4 nur ein einziger Fräskopf mit Radius R benötigt.

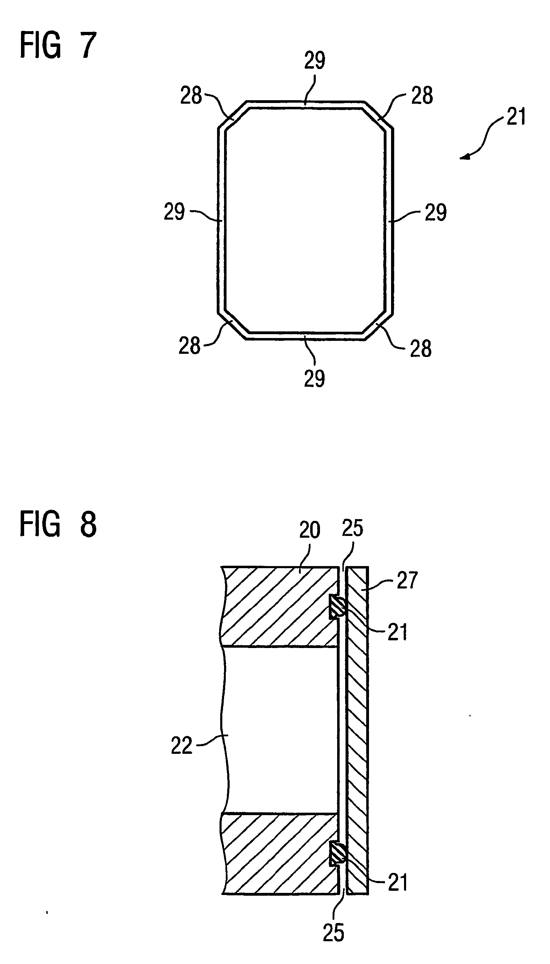

Die vorteilhafte Verwendung der Dichtung zum Abdichten zweier Bauteile, insbesondere zweier Brennstoffzellenbauteile, ist in den Figuren 6, 7 und 8 dargestellt. Ein rahmenförmiges Brennstoffzellenbauteil 20 umfasst einen Raum 22, der für die Aufnahme eine Gases vorgesehen ist und zu einer Seite mit einer auf dem rahmenförmigen Brennstoffzellenbauteil 20 aufliegenden plattenförmigen Brennstoffzellenbauteil 27 abgeschlossen wird (siehe FIG. 8). Beide Brennstoffzellenbauteile 20,27 sind mit Durchbrechungen 24 für Verteilerkanäle für die Zu- und Abführung von Flüssigkeiten bzw. Gasen zu den einzelnen Brennstoffzellen versehen.

Um zu verhindern, daß Gas den Innenraum 22 an der Verbindungsfläche des rahmenförmigen Brennstoffzellenbauteils 20 mit dem benachbarten plattenförmigen Brennstoffzellenbauteil 27 verläßt, ist eine Abdichtungen zwischen beiden Bauteilen vorgesehen. Hierzu ist das rahmenförmige Brennstoffzellenbauteil 20 mit einer umlaufenden Nut 25 versehen, in die eine Dichtung 21 gemäß FIG 7 einlegbar ist.

Eine gute Abdichtung durch die in die umlaufende Nut 25 einlegbare Dichtung 21 wird dadurch erzielt, daß die Dichtung 21 entsprechend der umlaufenden Nut 25 geschlossen ist. Durch die Verwendung eines einstückigen, geschlossenen Dichtungselements entfallen die im Fall mehrerer einzelner, aneinandergereihter Dichtungselemente notwendigen Klebeverbindungen zwischen aneinandergrenzenden Dichtungselementen, die leicht zu Undichtigkeiten führen.

FIG 8 zeigt das rahmenförmige Brennstoffzellenbauteil 20 gemäß FIG 6 im Schnittverlauf VIII-VIII mit der eingebrachten, umlaufenden Nut 25, darin eingelegter Dichtung 21 und auf der Dichtung 21 aufliegendem plattenförmigen Brennstoffzellenbauteil 27. Das plattenförmige Brennstoffzellenbauteil 27 wird in nicht dargestellter Weise auf die Dichtung 21 gepresst, so dass eine sichere und dauerhafte Abdichtung des Gasraumes 22 an der Verbindungsfläche zwischen den beiden Brennstoffzellenbauteilen 20,27 gegeben ist.

Die Dichtung 21 besitzt hierbei eine Außenkontur entsprechend der in FIG. 4 gezeigten Dichtung 11 und ist mit einem Übermaß derart versehen, daß sie im Sinne einer Selbsthaltung im Pressitz gegenüber den Seitenwandungen der Nut 25 fixierbar ist. Die Montage der Dichtung 21 und des plattenförmigen Brennstoffzellenbauteils 27 auf das rahmenförmige Brennstoffzellenbauteil 20 ist somit auch bei der in FIG 8 dargestellten Lage des rahmenförmigen Brennstoffzellenbauteils 20 aufgrund der Selbsthaltung der Dichtung 21 in der Nut 25 problemlos möglich.

Falls das rahmenförmige Brennstoffzellenbauteil 20 und das plattenförmige Brennstoffzellenbauteil 27 mittels Schraubverbindungen zusammengepresst werden, die in deren jeweiligen Eckzonen 23 angeordnet sind, weisen die in den Eckzonen 23 verlaufenden Eckbereiche 28 der Dichtung 21 einen im Vergleich zu den Längsbereichen 29 der Dichtung höheren Anpressdruck auf. Da die Dichtung 21 bezüglich eines bestimmten Anpressdruckes optimiert ist, können Abweichungen von diesem Anpressdruck zu Undichtigkeiten führen.

Eine gute Abdichtung auch bei unterschiedliche Anpressdrücken entlang des Verlaufs der Dichtung 21 kann erzielt werden, wenn die Dichtung 21 in ihrem Verlauf unterschiedlichen Außenkonturen aufweist. Da mittels der Außenkontur die Elastizität der Dichtung beeinflußbar ist, kann die Dichtung 21 entlang ihres Verlaufs durch entsprechend unterschiedliche Gestaltung der Außenkonturen auf einfache Weise an unterschiedliche Anpressdrücke angepasst werden. Somit kann in den Eckbereichen 28 mit höherem Anpressdruck die Dichtung 21 mit einer geringeren Elastizität als in Bereichen mit geringerem Anpressdruck versehen werden. Dies kann auf einfache Weise z.B. durch Vergrößerung der Kopfteilbreite A und Zwischenteilhöhe H in den Eckbereichen 28 erfolgen.

Der Grundgedanke vorliegender Erfindung lässt sich wie folgt zusammenfassen:
Eine einfache Montage einer in eine Nut (5,25) einlegbaren Dichtung (1,11,21) auch bei schwieriger Lage der gegenseitig abzudichtenden Bauteile (4,8,20,27) ist dadurch möglich, dass die Dichtung (1,11,21) eine solche Formgebung mit Übermaß besitzt, dass sie zumindest im Sinne einer Selbsthaltung im Presssitz gegenüber den Seitenwandungen (7) der Nut (5,25) fixierbar ist. Für eine dauerhafte und sichere Abdichtung bei einer Dichtung (1,11,21) mit einem dem Nutgrund (6) zugewandten Fußteil (2,12) und einem dem Nutgrund (6) abgewandten Kopfteil (3,13) ist das Übermaß am Fußteil (2,12) der Dichtung vorgesehen und die Dichtung (1,11,21) besitzt eine derartige Formgebung, dass oberhalb des Fußteils (2,12) ein Freiraum gegenüber der Nut (5,25) verbleibt, in den die Dichtung (1,11,21) bei Krafteinwirkung auf ihren Kopfteil (3,13) ausweichen kann.

## Patentansprüche

1. Nut (5,25) mit einer darin eingelegten Dichtung (1,11,21) aus elastischem Material mit einem dem Nutgrund (6) zugewandten Fußteil (2,12) und einem dem Nutgrund (6)abgewandten Kopfteil (3,13) und mit einer solchen Formgebung mit Übermaß, dass die Dichtung (1,11,21) zumindest im Sinne einer Selbsthaltung im Presssitz gegenüber den Seitenwandungen (7) der Nut (5,25) fixiert ist, wobei die Nut im Querschnitt im Wesentlichen rechteckig ausgeführt ist und die Dichtung (1,11,21) für das Übermaß eine Breite (E) aufweist, die größer als eine Breite (G) der Nut (5, 25) ist, wobei das Übermaß an dem Fußteil (2,12) der Dichtung (1,11,21) vorgesehen ist und die Dichtung (1,11,21) eine derartige Formgebung aufweist, dass oberhalb des Fußteils (2,12) ein Freiraum (9) gegenüber der Nut (5,25) verbleibt, in den die Dichtung (1,11,21) bei Krafteinwirkung auf ihren Kopfteil (3,13) ausweichen kann, wobei sich der Querschnitt der Dichtung (1,11,21) von dem Fußteil(2,12) zu dem Kopfteil (3,13) im Sinne einer entsprechenden Zunahme des Freiraums (9) verringert,
**dadurch gekennzeichnet, dass**
das Übermaß durch eine teilkreisförmige, wulstförmige Ausformung an dem Fußteil gebildet ist, die an einer dem Nutgrund zugewandten Seite des Fußteils angeordnet ist, wobei zumindest ein im Querschnitt mittlerer Bereich des Fußteils (2,12) auf dem Nutgrund (6) aufliegt.

2. Nut (5,25) mit einer darin eingelegten Dichtung (1,11,21) nach Anspruch 1,
**dadurch gekennzeichnet, dass** die Krafteinwirkung durch ein auf den Kopfteil (3,13) der Dichtung (1,11,21) zur Abdichtung gegenüber der Nut (5,25) aufgelegtes Bauteil (8,27), insbesondere ein Brennstoffzellenbauteil, erfolgt.

3. Nut (5,25) mit einer darin eingelegten Dichtung (1,11,21) nach Anspruch 1 oder 2,
**dadurch gekennzeichnet, dass**
die Verringerung des Querschnittes im Sinne von teilkreisförmigen Außenkonturen (R1,R2) für den Fußteil (2,12) und den Kopfteil (3,13) ausgebildet ist.

4. Nut (5,25) mit einer darin eingelegten Dichtung (1,11,21) nach zumindest einem der Ansprüche 2 bis 3,
**gekennzeichnet, durch** ein an dem Kopfteil (3,13) der Dichtung (1,11,21) gegenüber dem aufgelegten Bauteil (8,27) vorstehendes Dichtungsteil (15), insbesondere mit teilkreisförmiger Außenkontur (R3).

5. Nut (5,25) mit einer darin eingelegten Dichtung (1,11,21) nach zumindest einem der Ansprüche 1 bis 4,
**dadurch gekennzeichnet, dass** der mittlere Bereich des Fußteils (6) durch ein an dem Fußteil (2,12) der Dichtung (1,11,21) gegen den Nutgrund (6) vorstehendes Dichtungsteil (16), insbesondere mit teilkreisförmiger Außenkontur (R4), ausgebildet ist.

6. Nut (5,25) mit einer darin eingelegten Dichtung (1,11,21) nach zumindest einem der Ansprüche 1 bis 4,
**dadurch gekennzeichnet, dass** die dem Nutgrund (6) zugewandte Seite des Fußteils (2,12) eine ebene Fläche bildet.

7. Nut (5,25) mit einer darin eingelegten Dichtung (1,11,21) nach zumindest einem der Ansprüche 3 bis 6,
**dadurch gekennzeichnet, dass**
die teilkreisförmigen Außenkonturen (R1,R2,R3,R4) einen gleichen Radius aufweisen.

8. Nut (5,25) mit einer darin eingelegten Dichtung (1,11,21) nach zumindest einem der Ansprüche 1 bis 7,
**dadurch gekennzeichnet, dass** zwischen dem Kopfteil (3,13) und dem Fußteil (2,12) ein Zwischenteil (14) mit überwiegend geradliniger Außenkontur (14) vorgesehen ist.

9. Umlaufende Nut (5,25) mit einer darin eingelegten Dichtung (1,11,21) nach zumindest einem der Ansprüche 1 bis 8,
**dadurch gekennzeichnet, dass** die Dichtung (1,11,21) entsprechend der umlaufenden Nut (25) geschlossen ist.

10. Umlaufende Nut (5,25) mit einer darin eingelegten Dichtung (1,11,21) nach Anspruch 9,
**dadurch gekennzeichnet, dass** die geschlossene Dichtung (1,11,21) in ihrem Verlauf unterschiedliche Außenkonturen aufweist.

11. Verwendung der Nut (5,25) mit einer darin eingelegten Dichtung (1,11,21) nach einem der vorhergehenden Ansprüche zur Abdichtung zweier Bauteile (4,8,20,27), insbesondere zweier Brennstoffzellenbauteile (4,8,20,27), wobei in eines der beiden Bauteile (4,20) die umlaufende Nut (5,25) zum Einlegen der Dichtung (1,11,21) eingebracht ist.

## Claims

1. Groove (5, 25) with a seal (1,11,21) made of elastic material inserted therein, with a base part (2,12) facing the base of the groove (6) and an upper part (3,13) facing away from the base of the groove (6) and having a shape with an overdimension such that the seal (1,11,21) is fixed against the lateral walls (7) of the groove (5,25), at least in order to hold itself in place in a press fit, wherein in cross-section the groove is essentially embodied in rectangular form and the seal (1,11,21) has a width (E) for the overdimension which is greater than a width (G) of the groove (5, 25), wherein the overdimension is provided on the base part (2,12) of the seal (1,11,21), and the seal (1,11,21) is of a shape such that a free area (9) in relation to the groove (5,25) remains above the base part (2,12), into which the seal (1,11,21) can yield upon the application of force to its upper part (3,13), wherein the cross-section of the seal (1,11,21) reduces in size from the base part (2,12) to the upper part (3,13), in order to enable a corresponding enlargement of the free area (9), **characterised in that** the overdimension is formed by a part-circular toroidal moulding on the base part, which is arranged on a side of the base part facing the base of the groove, wherein at least a cross-sectionally central area of the base part (2,12) rests on the base of the groove (6).

2. Groove (5,25) with a seal (1,11,21) inserted therein according to claim 1, **characterised in that** the application of force takes place by means of a component (8,27), in particular a fuel cell component, placed on the upper part (3,13) of the seal (1,11,21), for the purposes of sealing against the groove (5,25).

3. Groove (5,25) with a seal (1,11,21) inserted therein according to claim 1 or 2, **characterised in that** the reduction in the cross-section is embodied for the purposes of part-circular outer contours (R1,R2) for the base part (2,12) and the upper part (3,13).

4. Groove (5,25) with a seal (1,11,21) inserted therein according to at least one of claims 2 to 3, **characterised by** a seal section (15) on the upper part (3,13) of the seal (1,11,21) which projects against the component (8,27) laid thereupon, in particular with a part-circular outer contour (R3).

5. Groove (5,25) with a seal (1,11,21) inserted therein according to at least one of claims 1 to 4, **characterised in that** the central area of the base part (6) is embodied by a seal section (16) on the base part (2,12) of the seal (1,11,21) which projects against the base of the groove (6), in particular with a part-circular outer contour (R4).

6. Groove (5,25) with a seal (1,11,21) inserted therein according to at least one of claims 1 to 4, **characterised in that** the side of the base part (2,12) facing the base of the groove (6) forms a flat surface.

7. Groove (5,25) with a seal (1,11,21) inserted therein according to at least one of claims 3 to 6, **characterised in that** the part-circular outer contours (R1,R2,R3,R4) have the same radius.

8. Groove (5,25) with a seal (1,11,21) inserted therein according to at least one of claims 1 to 7, **characterised in that** an intermediate part (14) with a predominantly straight outer contour (14) is provided between the upper part (3,13) and the base part (2,12).

9. Circumferential groove (5,25) with a seal (1,11,21) inserted therein according to at least one of claims 1 to 8, **characterised in that** the seal (1,11,21) is closed corresponding to the circumferential groove (25).

10. Circumferential groove (5,25) with a seal (1,11,21) inserted therein according to claim 9, **characterised in that** the closed seal (1,11,21) has different outer contours over its extent.

11. Use of the groove (5,25) with a seal (1,11,21) inserted therein according to one of the preceding claims, for the sealing of two components (4,8,20,27), in particular two fuel cell components (4,8,20,27), wherein the circumferential groove (5,25) is created in one of the two components (4,20) for insertion of the seal (1,11,21).

## Revendications

1. Rainure ( 5, 25 ) ayant un joint ( 1, 11, 21 ) en matière élastique qui y est inséré, qui comprend une partie ( 2, 12 ) de pied tournée vers le fond ( 6) de la rainure et une partie ( 3, 13 ) de tête éloignée du fond ( 6 ) de la rainure et qui a une conformation avec un surdimensionnement tel que le joint ( 1, 11, 21 ) est immobilisé, au moins au sens d'une autofixation, en ajustement serré par rapport aux parois ( 7 ) latérales de la rainure ( 5, 25 ), la rainure étant réalisée en section transversale sensiblement rectangulaire et le joint (1, 11, 21) ayant pour le surdimensionnement une largeur ( E ), qui est plus grande qu'une largeur ( G ) de la rainure ( 5, 25 ), le surdimensionnement étant prévu à la partie ( 2, 12 ) de pied du joint ( 1, 11, 21 ) et le joint ( 1, 11, 21 ) ayant une conformation telle qu'il subsiste au-dessus de la partie ( 2, 12 ) du joint un espace ( 9 ) libre par rapport à la rainure ( 5, 25 ), espace dans lequel le joint (1, 11, 21) peut s'effacer lorsqu'une force est appliquée sur sa partie ( 3, 13 ) de tête, la section transversale du joint ( 1, 11, 21 ) diminuant, au sens d'une augmentation correspondante de l'espace ( 9 ) libre, de la partie ( 2, 12 ) de pied à la partie ( 3, 13 ) de tête,
**caractérisée en ce que**
le surdimensionnement est formé sur la partie de pied par une déformation en forme de bourrelet de forme partiellement circulaire, qui est disposée sur un côté, tourné vers le fond de la rainure, de la partie de pied, au moins une zone médiane en section transversale de la partie (2, 12) de pied s'appliquant sur le fond ( 6 ) de la rainure.

2. Rainure ( 5, 25 ) ayant un joint ( 1, 11, 21 ) qui y est inséré suivant la revendication 1,
**caractérisée en ce que** l'application de force s'effectue par un élément ( 8, 27 ), notamment un élément d'une pile à combustible, appliqué sur la partie ( 3, 13 ) du joint ( 1, 11, 21 ) pour réaliser l'étanchéité par rapport à la rainure ( 5, 25 ).

3. Rainure ( 5, 25 ) ayant un joint ( 1, 11, 21 ) qui y est inséré suivant la revendication 1 ou 2,
**caractérisée en ce que** la diminution de la section transversale est constituée, au sens de contour ( R1, R2 ) extérieur, en forme de partie de cercle pour la partie ( 2, 12 ) de pied et la partie ( 3, 13 ) de tête.

4. Rainure ( 5, 25 ) ayant un joint ( 1, 11, 21 ) qui y est inséré suivant au moins l'une des revendications 2 à 3,
**caractérisée par** une partie (5) d'étanchéité ayant, notamment, un contour ( R3 ) extérieur en forme de partie de cercle en saillie sur la partie ( 3, 13 ) de tête du joint ( 1, 11, 21 ) par rapport à l'élément ( 8, 27 ) appliqué.

5. Rainure ( 5, 25 ) ayant un joint ( 1, 11, 21 ) qui y est inséré suivant au moins l'une des revendications 1 à 4,
**caractérisée en ce que** la zone médiane de la partie ( 6 ) de pied est formée par une partie (16) de joint ayant, notamment un contour ( R4 ) en forme de partie de cercle en saillie sur la partie ( 2, 12 ) de pied du joint ( 1, 11, 21 ) vers le fond ( 6 ) de la rainure.

6. Rainure ( 5, 25 ) ayant un joint ( 1, 11, 21 ) qui y est inséré suivant au moins l'une des revendications 1 à 4,
**caractérisée en ce que** le côté, tourné vers le fond ( 6 ) de la rainure, de la partie ( 2, 12 ) de pied forme une surface plane.

7. Rainure ( 5, 25 ) ayant un joint ( 1, 11, 21 ) qui y est inséré suivant au moins l'une des revendications 3 à 6,
**caractérisée en ce que** les contours (R1, R2, R3, R4 ) extérieurs en forme de partie de cercle ont un même rayon.

8. Rainure ( 5, 25 ) ayant un joint ( 1, 11, 21 ) qui y est inséré suivant au moins l'une des revendications 1 à 7,
**caractérisée en ce qu'**il est prévu une partie ( 14 ) intermédiaire ayant un contour ( 14 ) extérieur d'une manière prépondérante rectiligne entre la partie ( 3, 13 ) de tête et la partie ( 2, 12 ) de pied.

9. Rainure ( 5, 25 ) faisant le tour et ayant un joint ( 1, 11, 21 ) qui y est inséré suivant au moins l'une des revendications 1 à 8,
**caractérisée en ce que** le joint ( 1, 11, 21 ) est fermé conformément à la rainure ( 25 ) faisant le tour.

10. Rainure ( 5, 25 ) faisant le tour et ayant un joint ( 1, 11, 21 ) qui y est inséré suivant la revendication 9,
**caractérisée en ce que** le joint ( 1, 11, 21 ) fermé a, dans son tracé, des contours extérieurs différents.

11. Utilisation de la rainure ( 5, 25 ) ayant un joint ( 1, 11, 21 ) qui y est inséré suivant l'une des revendications précédentes, pour rendre étanche deux éléments (4, 8, 20, 27 ), notamment deux éléments (4, 8, 20, 27) de pile à combustible, la rainure ( 5, 25 ) faisant le tour étant, pour l'insertion du joint ( 1, 11, 21 ), insérée dans l'un des deux éléments ( 4, 20 ).
